Europäisches Patentamt

European Patent Office

Office européen des brevets

(19)

(11) **EP 1 298 942 A1**

(12) **EUROPEAN PATENT APPLICATION**

(43) Date of publication:
**02.04.2003 Bulletin 2003/14**

(51) Int Cl.⁷: **H04Q 3/66**, H04L 12/28,
H04L 12/56, H04M 7/00

(21) Application number: **02021066.2**

(22) Date of filing: **20.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.09.2001 JP 2001289800**

(71) Applicant: **SHARP KABUSHIKI KAISHA
Osaka 545 (JP)**

(72) Inventor: **Yakura, Motohiro
Higashihiroshima-shi, Hiroshima (JP)**

(74) Representative: **Müller - Hoffmann & Partner
Patentanwälte,
Innere Wiener Strasse 17
81667 München (DE)**

(54) **Least cost calling method and system in communication network**

(57)     During a call through an information and communication network, when a calling path (17) with cheaper rate than that of the calling path (16) which has been established becomes available, the calling path can be switched to continue the call. A call is possible between telephones (1,2) in the Internet (3) through calling paths (16,17) which are selected from an IP network (15) including an access network (10) and ISP networks (11 to 14). In cases where the calling path (17) with cheaper rate becomes available during the call, connection is switched from the calling path (16) which has been established to the calling path (17) with cheaper rate so that as the call is continued, the rate can be reduced.

FIG. 1

## Description

BACKGROUND OF THE INVENTION

1. Field of the Invention

This invention relates to a calling method, a calling terminal and a calling system through an information and communication network by use of an IP network such as the Internet and an IP based virtual leased line network and so on, and IP technologies and so on.

2. Description of the Related Art

Up to now, the Internet which adopts a protocol called as TCP/IP has been expanding on a global basis as an information and communication network. In the Internet, data is divided into packets in accordance with a network class protocol which is abbreviated to IP from Internet Protocol, and transferred to an address which is designated as an IP address. The protocol of IP has a function for identifying an other party, such as division and fabrication of packets, designation of an address and selection of a transfer path. A superior class protocol of IP which is abbreviated to TCP from Transmission Control Protocol is, mainly in case of accessing to the Internet from a terminal such as a work station and a personal computer, used to establish a communication path by specifying a software for use in communication.

In a data communication through the Internet in which data is divided into a plurality of packets, there is no guarantee that time interval and order for transmitting packets are surely accorded with time interval and order for receiving packets. To the packet, a TCP header which shows what-like position the packet is located at as for a whole of data is added. In case of static data, original data can recover based upon information of the TCP header.

As the Internet has been developing, demands for transfer of dynamic data, for example a real time application such as voices and motion pictures and a high quality service for business have been increasing. In data where real time is important, it is necessary that the time interval and order are not out of alignment even if packets are transferred. Therefor, in the information and communication network, has been developed a technology which folds a quantity called as QoS from Quality of Services within a certain range, such as band speed of communication, delay time of a packet and quantity of jitter as its variation and loss factor of a packet, as quality of a network service. As a result, it becomes possible to guarantee the delay in packet exchange, and a network in which data communication and voice communication are integrated is being figured out. As a technology for carrying out data communication by extending a telephone network, ISDN (Integrated Service Digital Network), ADSL (Asymmetric DSL) as one kind of DSL (Digital Subscriber Line), a frame relay, ATM (Asynchronous Transfer Mode) and so on came on the scene, and as a technology for carrying out communication which needs QoS of voice and so on by extending a data communication network, technologies called as Diff-Serv and IntServ/RSVP have been coming on the scene. A transfer use cable of Cable Antenna Television and Community Antenna Television which are abbreviated to CATV, an optical fiber cable which is called as FTTH (Fiber to The Home) and so on are used for connecting to the Internet. In particular, since the data communication has been exceeding voice communication quantitatively, it is effective to build the telephone network on the IP network, rather than building the IP network on the telephone network so that DiffServ and so on are becoming important.

A technology for switching a calling path between the IP network and the public line network during a call by a communication apparatus which can be connected to the IP network has been already disclosed. For example, Japanese Unexamined Patent Publication JP-A 10-155034 (1998) gazette discloses a technology relating to a communication terminal in which a conversation through the public line network is carried out and thereafter, it is switched to a call through the Internet. Japanese Unexamined Patent Publication JP-A 2000-184411 (2000) gazette discloses a technology relating to an exchange machine which can switch from a connection through the Internet to a connection through the public line network, in cases where quality of a call is deteriorated during a call through the Internet. Further, also disclosed is a technology in which, prior to establishment of a call, out of a plurality of networks which can be connected including through the Internet, the cheapest network is selected and connected. Japanese Unexamined Patent Publication JP-A 2000-174823 (2000) gazette discloses a technology in which, in a telephone which can be connected through the public line network and through the Internet, in cases where quality of a call is deteriorated during a call through the Internet, the telephone automatically judges it so that the connection through the Internet is switched to the connection through the public line network.

Further, a technology for charging as for a call through the IP network has been already disclosed. Japanese Unexamined Patent Publication JP-A 10-98494 (1998) gazette discloses a technology in which a relay means is disposed at a boundary portion of the public line network and the Internet at a transmitting side and at a receiving side and monitors establishment of a call and completion of the call so that duration of a call in the public line network and the Internet is measured and a rational amount to be charged is calculated.

As stated above, by use of the technologies which have been already disclosed, in a communication apparatus which can carry out a call through the Internet, it becomes possible to switch a calling path during a call between the Internet and the public line network, by conditions such as deterioration of quality of a call.

Further, prior to a call, a rate is compared between one through the Internet and one through the public line network and a cheaper path can be selected. Furthermore, in a call through the Internet, it is possible to charge rationally.

However, there is no reference as to switching to another communication path in the Internet. Further, there is also no reference as to switching a communication path, taking a rate for a call into consideration during a call. In the IP telephone service, there generally exist connections by use of different communication paths, even in case of a call with the same destination. Then, generally, the rate varies depending on a difference of communication paths in the Internet which are passed through. Further, in the same manner as the telephone service in the public line network, a rate for a call generally varies depending upon a day of the week and time zone, in the telephone service in the Internet.

In the related technologies, it is impossible to switch to a call which passes through another calling path in the Internet. Accordingly, even in cases where there occurs to exist cheaper another calling path during a call, a call through a calling path with high rate has still to be continued.

SUMMARY OF THE INVENTION

The purpose of this invention is to provide a calling method, a calling terminal and a calling system through an information and communication network which can switch a calling path in cases where a cheaper calling path becomes available than a calling path which establishes a call, during a call through the information and communication network, and can continue the call.

The invention provides a calling method though an information and communication network comprising the steps of setting a calling path in an information and communication network; connecting a transmitting terminal to a receiving terminal; and establishing a call in packet communication, wherein, while the call is continuing between the transmitting terminal and the receiving terminal, when it becomes possible to use a calling path with cheaper rate than that of the calling path which has been established, the transmitting terminal or the receiving terminal switches the calling path so as to have a conversation through the calling path with cheaper rate.

According to the invention, it becomes possible to establish a call between the transmitting terminal and the receiving terminal by setting a calling path of the information and communication network such as the Internet. When it becomes possible to use a calling path with cheaper rate than that of the calling path which has been established, the calling path is switched to the calling path with cheaper rate so that the calling path with cheaper rate can be utilized without continuing the call through the calling path with higher rate.

For example, during a call, at regular time intervals or at a designated timing, information of whether or not another calling path which is available exists in the Internet and rates are inquired, and in cases where another calling path which is available exists and its rate is cheaper than that of the calling path which is now utilized, it can be switched to the cheaper calling path. A regular time interval which a user who is using the transmitting terminal or the receiving terminal designates and which can be changed, or a boundary time where a rate is changed is obtained in advance and at the timing of the boundary time, the check of a rate for a call can be carried out. The rates in respective calling paths are stored in the terminal in advance or it is connected to a database with regard to each check of a rate, and thereby, information of rates can be obtained. Further, together with the information of whether it is available or not, quality of a call at that time point is also checked and may be made to be one of parameters for selecting a calling path.

According to the invention, a calling path is established in the information and communication network and a call is established between the transmitting terminal and the receiving terminal, and in cases where a calling path with cheaper rate than that of the calling path which has been established becomes available, the calling path can be switched to the calling path with cheaper rate. Users of the transmitting terminal and the receiving terminal can save the rate which they do not have to pay.

Further, in the invention it is preferable that, as for the switching of the calling path, in cases where the switching is available at a destination terminal or in the information and communication network, as a calling path which has been established is maintained, a connection is established from the established calling path to the calling path with cheaper rate, and after the connection is completed, the switching is carried out by disconnecting the calling path which has been established.

According to the invention, on the occasion of switching from the calling path which has been established to the calling path with cheaper rate than that of the calling path which has been established, in cases where the switching is available at the destination terminal or in the information and communication network, as the calling path which has been established is maintained, the connection to the calling path with cheaper rate is carried out. After the connection by the calling path with cheaper rate than that of the calling path which has been established is completed, the calling path which has been established is to be discontinued so that the switching can be carried out without generating a break of voice and so on.

Further, according to the invention, on the occasion of switching from the calling path which has been established to the calling path with cheaper rate than that of the calling path which has been established, it is possible not to generate a break of voice and so on.

Furthermore, in the invention it is preferable that timing for switching the calling path can be designated from the transmitting terminal or the receiving terminal.

According to the invention, since a user as a sender who uses the transmitting terminal or as a receiver who uses the receiving terminal can designate the timing for switching the calling path, the user can switch the calling path explicitly at an arbitrary timing.

Further, according to the invention, the user as the sender who uses the transmitting terminal or as the receiver who uses the receiving terminal can switch the calling path explicitly at an arbitrary timing.

Furthermore, in the invention it is preferable that, a data base is constructed which provides rates of plural calling paths and data relating to the calling paths and their usability, and judgment for switching the calling path is carried out by obtaining data relating to the rates from the database.

According to the invention, judgment for switching the calling path can be carried out based upon the rate of the calling path which is obtained from the database and data including usability of its calling path.

Further, according to the invention, the judgment for switching the calling path can be carried out appropriately based upon data which is obtained from the database.

Furthermore, in the invention it is preferable that data as to the rates can be obtained from the database, relating to at least one of time zone, a day of the week, whether it is a national holiday or not, area, distance, and duration of a call.

According to the invention, even if the rate of the calling path varies depending on time zone, a day of the week, whether or not it is a national holiday, an area, distance, duration of call and so on, it is possible to obtain it as data from the database and therefore, it is possible to carry out a comparison of appropriate rates on the occasion of switching the calling path.

Further, according to the invention, even if the rate of the calling path varies depending on time zone, a day of the week, whether or not it is a national holiday, area, distance, duration of a call and so on, it is possible to carry out a comparison of appropriate rates on the occasion of switching the calling path.

Furthermore, in the invention it is preferable that, whether or not the rate is cheaper than that of the established calling path is judged by predicting not only a difference of the rates at that time point but also time up to completion of the call and by calculating the rate for the call based upon the predicted time.

According to the invention, on the occasion of switching the calling path, for example, based upon a past record as to duration of a call with the same destination, the time up to completion of the call is predicted and a comparison of the rates is carried out, and therefore, the user can effectively save the rate which is required to complete the call.

Further, according to the invention, the user of the call can effectively save the rate which is required to complete the call by use of the past record as to the duration of the call with the same destination.

Further, in the invention it is preferable that, whether or not the rate is cheaper than that of the established calling path is judged not only by difference of the rates at that time point but also by measurement of quality of the call in the calling path which can be switched, and comparison of the measured values.

According to the invention, since the judgment of whether or not switching to the calling path with cheaper rate is carried out is carried out by measuring the quality of the call including the comparison of the measured values, it is possible to prevent a call from being switched to a call which passes through a calling path with cheap rate but with very bad quality of the call.

Further, according to the invention, since the judgment of whether or not switching to the calling path is carried out is carried out by measuring the quality of the call, it is possible to prevent a call from being switched to a call which passes through a calling path with cheap rate but with very bad quality of the call.

Furthermore, in the invention it is preferable that, as for the measurement of the quality of the call, a plurality of packets to be measured are transmitted through a target calling path, and a reply from a receiving side is received so that receiving reply rate, delay and jitter which is fluctuation of the delay are measured.

According to the invention, on the occasion of judging whether or not the calling path is switched, the plurality of packets to be measured are transmitted in fact through the target calling path, and the reply from the receiving side is received so that receiving reply rate, delay and jitter which is fluctuation of the delay are measured. Since the jitter is measured in addition to the receiving reply rate and delay, the quality of the call can be judged with a high degree of accuracy.

Further, according to the invention, on the occasion of judging whether or not the calling path is switched, since transfer of packet is carried out in fact through a calling path which is a target for judgment and then, receiving reply rate, delay and jitter which is fluctuation of the delay are measured, the quality of the call can be judged with a high degree of accuracy.

Furthermore, in the invention it is preferable that an object to which the established calling path is switched includes a public line network for use in telephone communication or a leased line network.

According to the invention, since an object to which the calling path is switched includes not only an information and communication network but also a public line network for use in telephone communication which includes an analogue telephone network including xDSL and an ISDN digital network and so on, or a leased line network including a CATV network, an ATM network, a frame relay and so on, it is possible to carry out the switching by selecting a calling path with cheap rate out of a broad range of the objects.

According to the invention, since the object to which the calling path is switched includes not only the information and communication network but also the public line network for use in telephone communication and the leased line network, it is possible to carry out the switching by selecting a calling path with cheap rate out of a broad range of the objects.

Further, in the invention it is preferable that at least one of the transmitting terminal and the receiving terminal is connected to the information and communication network through the public line network for use in telephone communication or the leased line network.

According to the invention, in cases where the transmitting terminal and the receiving terminal are connected to the information and communication network through the public line network for use in telephone communication including the analogue telephone network including xDSL and ISDN digital network and so on, or the leased line network including CATV network, ATM network, the frame relay and so on even when the transmitting terminal and the receiving terminal are not directly connected to the information and communication network, it is possible to switch the calling path so that the rate is made to be cheaper.

Further, according to the invention, in cases where the transmitting terminal and the receiving terminal are connected to the information and communication network through the public line network for use in telephone communication or the leased line network even when the transmitting terminal and the receiving terminal are not directly connected to the information and communication network, it is possible to switch the calling path so that the rate is made to be cheaper.

Furthermore, the invention provides a calling terminal capable of establishing a call in packet communication through a calling path which is set in the information and communication network, and of serving as a transmitting terminal or a receiving terminal, the calling terminal comprising: path searching means for searching an available calling path with cheaper rate than that of a calling path which has been established, during the call established between the transmitting terminal and the receiving terminal, and path switching means for switching, when the calling path with cheaper rate than that of the established calling path is searched by the path searching means, the established calling path to the searched calling path.

According to the invention, in cases where a calling path is set in the information and communication network such as the Internet and a call is established between the transmitting terminal and the receiving terminal, an available calling path with cheaper rate than that of a calling path which has been established can be searched by the path searching means. Since the path switching means, when the calling path with cheaper rate than that of the calling path which has been established is searched by the path searching means, switches the calling path to pass through the searched calling path, it is possible to use the calling path with cheap rate without continuing the call through the calling path with high rate.

Further, according to the invention, in cases where an available calling path with cheaper rate than that of a calling path which has been established is searched even after a calling path is set in the information and communication network such as the Internet and a call is established between the transmitting terminal and the receiving terminal, it is possible to use the calling path with cheap rate without continuing the call through the calling path with high rate.

Furthermore, in the invention it is preferable that the path switching means, in cases where the switching of the calling path is available at a destination terminal or in the information and communication network, carries out a connection to the calling path with cheaper rate than that of the established calling path as the calling path which has been established is maintained, and after the completion of the connection, the established calling path is disconnected.

According to the invention, on the occasion of switching from the calling path which has been established to the calling path with cheaper rate than that of the calling path which has been established, in cases where the switching is available at a destination terminal or in the information and communication network, a connection to a calling path with cheaper rate than that of a calling path which has been established is carried out as the calling path which has been established is maintained, and after the completion of the connection, the calling path which has been established is to be disconnected so that the switching is carried out without generating a break of voice and so on.

Further, according to the invention, the switching can be carried out from the calling path which has been established to the calling path with cheaper rate than that of the calling path which has been established without generating a break of voice and so on.

Furthermore, in the invention it is preferable that the calling terminal further comprises designating means capable of designating a timing for switching the calling path by the path switching means.

According to the invention, since the timing for switching the calling path can be designated by the designating means, a user of a calling terminal through the information and communication network can switch the calling path explicitly at an arbitrary timing.

Further, according to the invention, a calling apparatus through the information and communication network can switch the calling path explicitly at an arbitrary timing in accordance with designation of the user.

Furthermore, in the invention it is preferable that the calling terminal further comprises database means for providing data relating to a calling path and including rates of plural calling paths and its usability, wherein, in the path switching means, judgment for switching the calling path is carried out by obtaining data relating to rates from the database means.

According to the invention, since the calling terminal through the information and communication network includes database means for providing data relating to a calling path and including rates of plural calling paths and its usability and the judgment for switching the calling path is carried out by obtaining data relating to rates from the database means, it is possible to carry out the switching to the calling path with cheap rate by promptly obtaining data from the database means.

Further, according to the invention, the calling apparatus through the information and communication network obtains data promptly from the database means and it is possible to carry out the switching to the calling path with cheap rate.

Furthermore, in the invention it is preferable that a database for providing data relating to the calling path and including the rates of plural calling paths and its usability is constructed in the information and communication network, and the path switching means carries out the judgment for switching the calling path by obtaining data relating to the rates from the database.

According to the invention, since the judgment for switching the call by obtaining the data relating to the rates from the database which is constructed in the information and communication network, it is possible to carry out appropriate judgment based upon the latest and wide-scale information which is managed by the database.

Further, according to the invention, it becomes possible to carry out the appropriate judgment for switching to the calling path with cheap rate, based upon the latest and wide-scale information which is managed by the database which is constructed in the information and communication network.

Furthermore, the invention provides a calling system capable of establishing a call in packet communication through a calling path which is set in the information and communication network, and of serving as a transmitting terminal or a receiving terminal, the calling system comprising:

a call relay device by which a plurality of calling paths can be set in the information and communication network;
a path exchanging device responsive to a call from the transmitting terminal to the receiving terminal for establishing a calling path which is selected from the plurality of calling paths by the call relay device and for switching the calling path to a calling path with cheap rate when the calling path which has been established and other calling paths are monitored and a calling path with cheaper rate than that of the established calling path becomes available, and a call charging device for charging a rate in response to the calling path to at least one of the transmitting terminal and the receiving terminal.

According to the invention, the calling path is set in the information and communication network such as the Internet by the call relay device and the call can be established between the transmitting terminal and the receiving terminal. When a calling path with cheaper rate than that of the calling path which has been established becomes available, the calling path is switched to the calling path with cheaper rate by the path exchanging device, and therefore, a user of the transmitting terminal or the receiving terminal to which the call charging device charges the rate can use the calling path with cheaper rate without continuing the call in the calling path with high rate. Since the call with cheap cost becomes possible, users of calls are increased and large income of rates as a whole of calls through the information and communication network although the rate to respective call is cheap so that it is possible to accomplish effective use of the information and communication network.

Further, according to the invention, a calling path is set in an information and communication network such as the Internet, and a call between a transmitting terminal and a receiving terminal is established, and when a calling path with cheaper rate than that of the calling path which has been established becomes available, the calling path can be switched so that the calling path with cheaper rate is passed through. A user of the transmitting terminal or the receiving terminal can use the calling path with cheap rate without continuing the call in the calling path with high rate.

Furthermore, the invention provides a calling system capable of establishing a call in packet communication through a calling path which is set in the information and communication network, and of serving as a transmitting terminal or a receiving terminal, the calling system comprising:

a call relay device which can set a plurality of calling paths in the information and communication network;
a path exchanging device responsive to a call from the transmitting terminal to the receiving terminal for establishing a calling path which is selected from the plurality of calling paths by the call relay device and for switching the calling path which has been established to another calling path in response to a request from the transmitting terminal or the receiving terminal; and
a call charging device for charging a rate in response to the calling path to at least one of the transmitting terminal and the receiving terminal.

According to the invention, a calling path is set in the information and communication network such as the Internet by the call relay device and a call can be established between the transmitting terminal and the receiving terminal. The path exchanging device, if there is a request from a user who is using the transmitting terminal or the receiving terminal, can switch the calling path which has been established to another calling path. A user and so on can switch the calling path by the path exchanging device so that a calling path with cheap rate is passed through, in like case that a calling path with cheaper rate than that of the calling path which has been established becomes available. A user of the transmitting terminal or the receiving terminal for which the call charging device charges the rate can use a calling path with cheaper rate without continuing the call in the calling path with high rate. Since the call with cheap cost becomes possible, users of calls are increased and large income of rates as a whole of calls through the information and communication network although the rate to respective call is cheap so that it is possible to accomplish effective use of the information and communication network.

Further, according to the invention, a calling path is set in an information and communication network such as the Internet, and a call is established between a transmitting terminal and a receiving terminal, and when there is a request from a user who is using the transmitting terminal or the receiving terminal, the calling path which has been established can be switched to another calling path. If there is a request for passing through a calling path with cheap rate by a user and so on, when the calling path with cheaper rate than that of the calling path which has been established becomes available, the calling path is switched to have the user use the calling path with cheap rate.

BRIEF DESCRIPTION OF THE DRAWINGS

Other and further objects, features, and advantages of the invention will be more explicit from the following detailed description taken with reference to the drawings wherein:

Fig. 1 is a block diagram showing a schematic structure of a calling system through an information and communication network as one embodiment of the invention;
Fig. 2 is a block diagram showing a schematic electrical structure of telephones 1 and 2 in Fig. 1;
Fig. 3 is a block diagram showing a schematic functional structure of the telephones 1 and 2 in Fig. 1;
Fig. 4 is a flow chart showing one example of processing which covers a whole of the embodiment of Fig. 1;
Fig. 5 is a flow chart showing one example of processing in case of a rate comparison operation in the embodiment of Fig. 1;
Fig. 6 is a flow chart showing one example of procedures for measuring quality of a call in the embodiment of Fig. 1;
Fig. 7 is a view showing one example of data structure of rate information which is used for rate comparison in the embodiment of Fig. 1;

Fig. 8 is a sequential view showing one example of communication procedures for inquiring a database server for rate information from the telephones 1 and 2 in the embodiment of Fig. 1; and
Fig. 9 is a block diagram showing in a simplified manner a system structure of a terminal side as another embodiment of the invention.

DETAILED DESCRIPTION OF THE PREFERRED EMBODIMENTS

Now referring to the drawings, preferred embodiments of the invention are described below.

Hereinafter, preferred embodiments of the present invention will be described based upon the drawings. This invention is applicable to all of a calling apparatus and an information processing apparatus which is capable of calling, which can be connected directly to an IP network such as the Internet or through a public line network (analogue line network, digital line network and so on)and a leased line network (ATM network, CATV network and so on), and in this embodiment, it will be described by taking a telephone as an example of the calling apparatus.

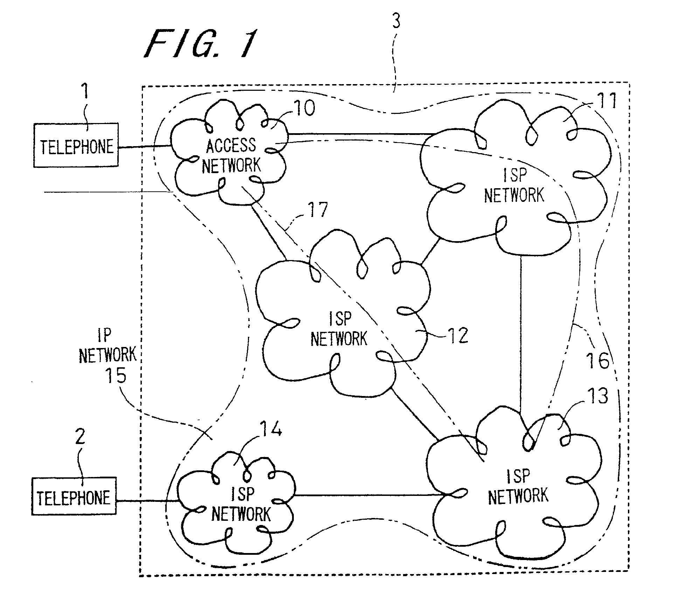

Fig. 1 shows a schematic structure of one example of a calling system as one embodiment of the invention. Telephones 1 and 2 are connected through the Internet 3 and a call is carried out. In the Internet 3, a plurality of ISPs (Internet Service Providers) are established and they are doing business for providing various kinds of services. The services which are provided by the ISP are available by connecting from the telephones 1 and 2 directly to the ISP or connecting through an access network 10 thereto. That is, with regard to an IP telephone, the Internet 3 includes the access network 10 and ISP networks 11, 12, 13 and 14.

Here, the telephone 1 is assumed to be a calling side telephone which is connected to the access network 10. The telephone 2 is assumed to be a called side telephone which is connected directly to the ISP network 14. The access network 10 and ISP networks 11 through 14 are, as shown in the figure, connected to one another. That is, the access network 10 and the ISP network 11, the access network 10 and the ISP network 12, the ISP network 11 and the ISP network 12, the ISP network 11 and the ISP network 13, the ISP network 12 and the ISP network 13, the ISP network 13 and the ISP network 14 are connected to each other respectively. In this manner, portions relating to the IP telephone including the access network 10 and the ISP networks 11 through 14 which exist in the Internet 3 are collectively called as an IP network 15.

In today's Internet 3, ISPs, academic organizations, companies and so on join, and networks which are operated by respective administrations are connected to one another so that the Internet is established. The respective networks are called as AS (Autonomous System), respectively. Since the IP telephone service which provides a telephone communication through the Internet 3 is provided by respective ISPs, here, it will be described about the IP network 15 including the ISP networks 11 through 14.

In cases where a connection is established to respective ISPs to use the IP telephone service, as stated above, there is a case that a user is connected to the ISP networks 11 and 12 through a network called as the access network 10. In this case, it is possible for the user to use any one of the ISP networks 11 and 12 to which the access network 10 is connected, separately or both at the same time. In the IP telephone service, in cases where a calling person and a called person belong to different ISPs, a plurality of ISPs which are passed through charge them. The monetary amount which is charged is different with respect to each ISP as a matter of course and if a path is different, a rate varies. For example, speaking relating to the ISP network 13, rates in a calling path 16 from the ISP network 11 through the ISP network 13 is different from that in a calling path 17 from the ISP network 12 through the ISP network 13. Such setting of rates of mutual ISPs is determined by an agreement between ISPs and so on. These rates which are necessary for a call are increased flatly in response to time, and the rate of the call varies depending on a time zone, a day of the week and so on.

For example, among calling paths which are established between the telephones 1 and 2 through the access network 10, the ISP networks 11, 13 and 14 including the calling path 16, the calling path 16 can be switched to a calling path 17 which passes through the ISP networks 12 and 13 and in which a rate is getting cheaper at a certain time point. In addition, in Fig. 1, it is assumed that the telephone 1 is of the calling side and the telephone 2 is of the called side, but in this invention, in cases where the telephone 2 is of the calling side and the telephone 1 is of the called side, they operate in the similar manner.

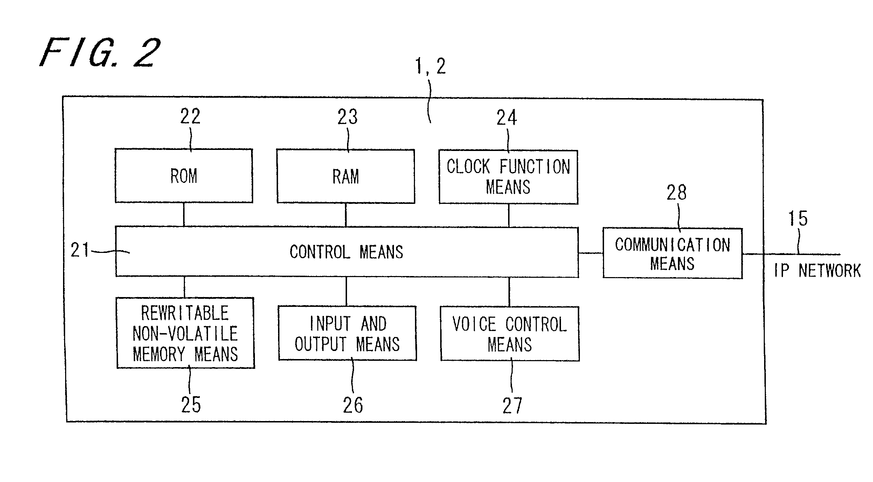

Fig. 2 shows a schematic electrical structure of the telephones 1 and 2 shown in Fig. 1. The telephones 1 and 2 include a control means 21 including a CPU and so on, a ROM 22 in which a program which is operated by the CPU and so on are stored, a RAM 23 which becomes a work area for processing of the CPU, a clock function means 24, a rewritable non-volatile memory means 25 for constructing a database and so on, an input and output means 26, a voice control means 27 and a communication means 28. The telephones 1 and 2 are connected through the IP network 15 and the communication means 28. The communication means 28 converts a signal appropriately between the IP network 15 and the control means 21. The control means 21 determines operations of an entire apparatus and gives instructions to the entire apparatus, as while, in cooperation with programs and data which are stored in the ROM 22 and the rewritable non-volatile memory means 25, and the RAM 23, an input from a user through the input and output means 26, an output for informing a user of information toward the input and output means 26, obtaining and setting of time from and to the clock function means 24, an input and output of voice data to and from the voice control means 27 are carried out.

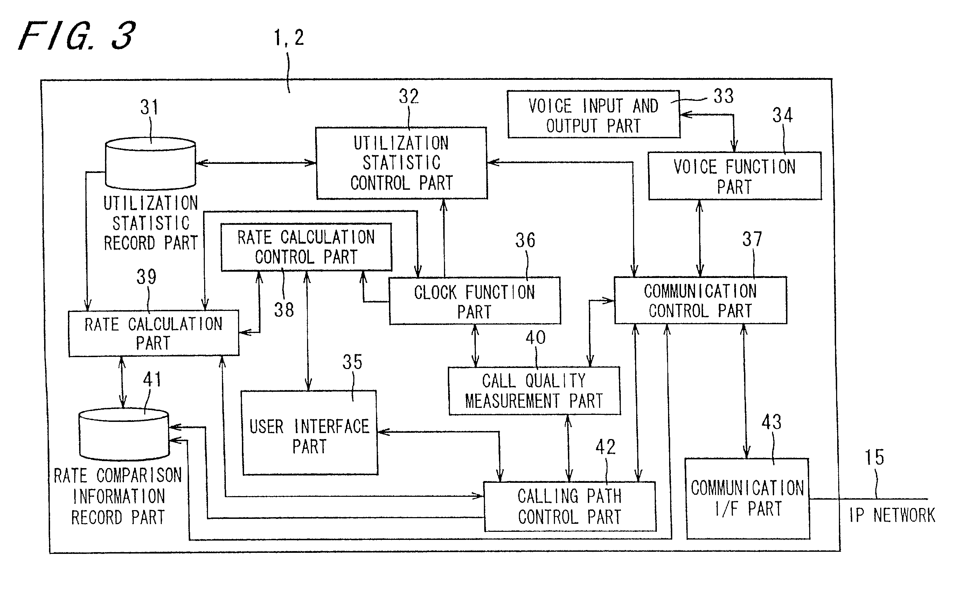

Fig. 3 shows a functional structure which is realized by a program operation in the telephones 1 and 2 shown in Fig. 2. The telephones 1 and 2 includes functions as a utilization statistic record part 31, a utilization statistic control part 32, a voice input and output part 33, a voice function part 34, a user interface part 35, a clock function part 36, a communication control part 37, a rate calculation control part 38, a rate calculation part 39, a call quality measurement part 40, a rate comparison information record part 41, a calling path control part 42 and a communication I/F part 43.

The utilization statistic record part 31 has a function in which a statistic of uses of a user can be recorded and can be read out. For example, a statistic value of a telephone number of a destination of a call and of a duration of the call are recorded. The utilization statistic control part 32 has a function in which the statistic of uses of the user is calculated and recorded into the utilization statistic record part 31. For example, by monitoring the communication control part 37, the destination telephone number and the duration of a call are obtained and if the statistic relating to the destination of the call exists in the utilization statistic record part 31, it is read out and a statistic value of the duration of a call is calculated and recorded in the utilization statistic record part 31. Here, for the statistic of the duration of a call, for example, can be used a weighted average which has an operation of a low pass filter for reducing influences due to variation of an arithmetic average and utilization time. However, in the invention, other statistic algorithm can be used and the statistic algorithm is not defined by the weighted average.

In addition, a value of the duration T of a call which is renewed as the weighted average can be calculated by the following first formula, assuming that a recorded value of duration of call is Told, a measured value is Tnew and a real number which is 0 and above and less than 1 is $\alpha$.

$$T = \alpha \times Tnew + (1-\alpha) \times Told \qquad (1)$$

The voice input and output part 33 exchanges voice data which is inputted and outputted on the occasion of a call with the voice function part 34. The voice function part 34 has a function for converting to signals which are appropriate respectively to the voice input and output part 33 and the communication control part 37. For example, an analogue signal which is inputted from the voice input and output part 33 is digitized and compressed and outputted to the communication control part 37. Adversely, a compressed digital signal which is inputted from the communication control part 37 is decompressed to be converted into an analogue signal and outputted to the voice input and output part 33. In addition, in the invention, a method of digitization in the voice function part 34 or methods of compression and decompression are not defined. As for them, existing technologies can be used.

The user interface part 35 has a function for receiving an input from a user and outputting to an appropriate portion. Further, it can receive a notification when a switching of a calling path occurs from the calling path control part 42, and indicate that the switching of the calling path occurred and inform a user of it. The clock function part 36 has a function for clocking a current time. Further, it is assumed that it can carry out the time setting. The communication control part 37 receives information from respective function parts and converts them into packets and outputs them to the communication I/F part 43. Adversely, a packet which is inputted to the communication I/F part 43 is processed in the form which is suitable for respective portions to be outputted. The rate calculation part 39 has a function for receiving an instruction from the rate calculation control part 38, for obtaining information from the rate comparison information record part 41, the utilization statistic record part 31 and the clock function part 36 and for outputting a result of calculation of rates in respective calling paths to the calling path control part 42. Further, the rate calculation part 39 has a function, based upon the information which was obtained from the rate comparison information record part 41, for calculating a timing for carrying out the rate calculation and for setting it in the rate calculation control part 38. The rate calculation control part 38 has a function for receiving the time information from the clock function part 36 and for outputting an instruction to have the rate calculation part 39 carried out the rate calculation when the timing for carrying out the rate calculation comes. A method for setting the timing for carrying out the rate calculation may be, for example, a method for setting to have this system carry out the rate calculation at regular time intervals by a user or it is possible that the rate calculation control part 38 obtains a boundary time when a rate is changed, by the rate calculation part 39 with regard to respective calling paths which are recorded and the setting thereof is carried out. The invention, however, does not define concrete means.

The call quality measurement part 40 has a function for monitoring the communication control part 37, for obtaining the time information from the clock function part 36 and for measuring delay of communication and jitter. Further, it is possible that the measured communication quality information is outputted to the calling path control part 42. The rate comparison information record part 41 has a function for obtaining and recording the rate information in respective calling paths which is being sent from outside through the communication control part 37 and for recording information of usability of respective calling paths. Further, the rate comparison information record part 41 is also possible to output the rate information to the rate calculation part 39. In addition, with regard to obtaining the rate information in respective calling paths, for example, it can be realized by carrying out a transfer request to a service server of an ISP which is connected. The invention, however, does not define concrete means therefor. Further, as for the information of usability of respective calling paths, it may be set that a user checks it at regular time intervals to this system and the information of usability of respective calling paths may be obtained through the calling path control part 42 and may be recorded. The invention, however, does not define concrete means therefor.

The calling path control part 42 has a function, from information of calculation results which were obtained from the rate calculation part 39 and the information of communication quality which was obtained from the call quality measurement part 40, for judging as to whether or not the calling path should be switched and calculating, if switched, which calling path should be switched and for, in case of switching, carrying out processing for switching a path through the communication control part 37. Further, on the occasion of the switching of a calling path, it is possible for the calling path control part 42 to notify it to the user interface part 35. Furthermore, the switching operation can be started in cases where there comes an instruction from the user interface part 35 at the designation of a user. In this case, it is possible for the calling path control part 42 to also receive information for designating a calling path which should be switched from the user interface part 35. The communication I/F part 43 has a function for converting a signal in a form which is suitable to each other, between the communication control part 37 and a transmission medium of the IP network 15. The IP network 15 is connected to the ISP through the access network or directly. In addition, the utilization statistic record part 31 and the rate comparison information record part 41 exist in the rewritable non-volatile memory means 25 shown in Fig. 2.

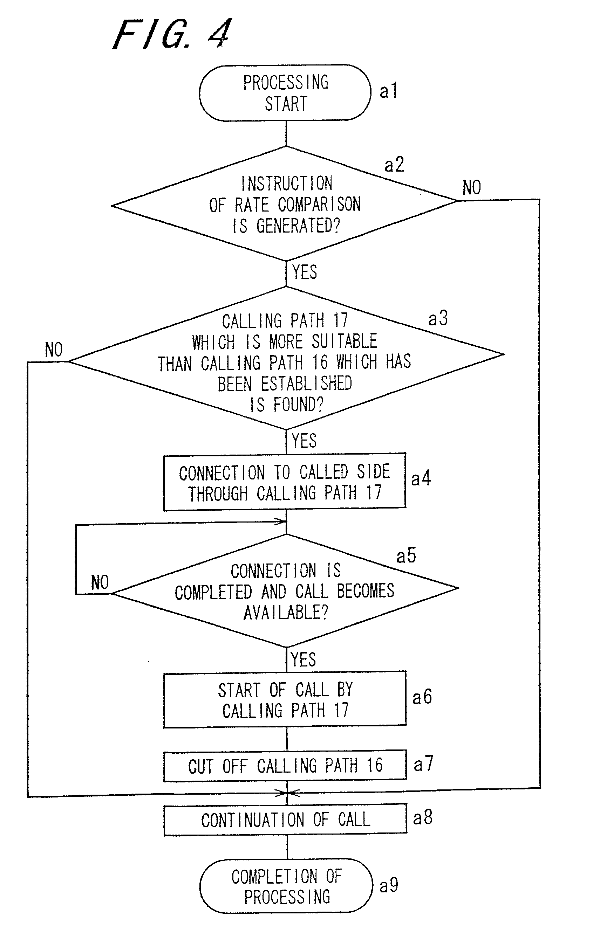

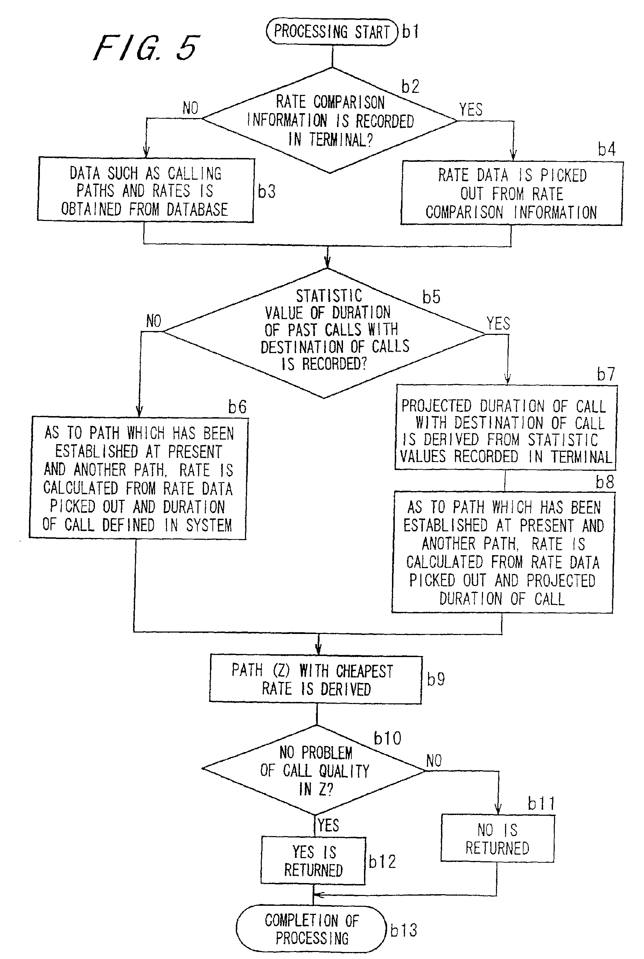

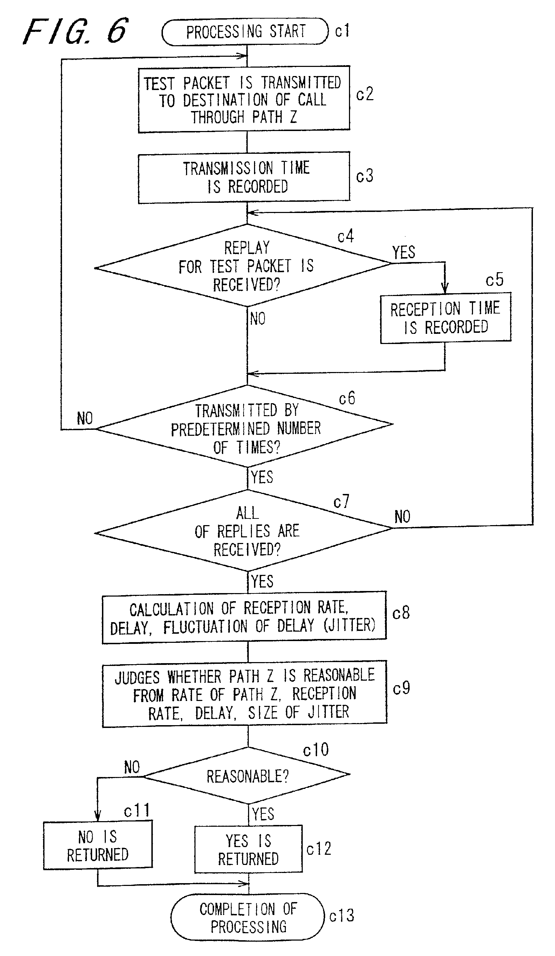

Fig. 4 shows one example of processing which covers a whole of the embodiment. A step a1 shows a starting point of the processing. At a step a2, whether or not an instruction of rate calculation is inputted to the rate calculation control part 38 is checked. In cases where the instruction of rate calculation is inputted, a routine goes to a step a3. At the step a3, rate calculation is carried out and whether or not an appropriate calling path with cheaper rata than that of the calling path which has been established is checked. As stated above, in cases where the calling path 17 with cheaper rate is found while the call has been established through the calling path 16 in Fig. 1, the routine goes to a step a4. At the step a4, as the call in the calling path which has been established at present (calling path 16) is maintained, a connection to a called side through the calling path 17 which was found at the step a3 is realized. As to the check at the step a3, more detailed explanation will be carried out in Figs.5 and 6.

At a step a5, whether or not the connection to the called side through the calling path 17 is completed so that a call is available is checked. In cases where it is not yet in a call available situation, the routine goes again to the step a5 and the check is continued until the call available situation is realized. In cases where it becomes in the call available situation, the routine goes to a step a6. At the step a6, a call through the calling path 17 is started. At this point, the call through the calling path 16 is still continued and a situation where a call is established through two paths of the calling path 16 and the calling path 17 is realized. At a step a7, a connection through the calling path 16 is cut off. This completes the switching from the calling path 16 to the calling path 17. At a step a8, the call is continued as it is. In cases where the instruction of rate calculation is not inputted at the step a2, the routine goes to the step a8 and the call is continued. In cases where a calling path which is an object to be switched is not found at the step a3, the routine goes to the step a8 and the call is continued. Thereafter, the routine goes to a step a9 to complete the processing.

In addition, in case of the switching of calling path as stated above, it is necessary that switching function is available by a destination terminal or by the IP network 15. For example, at the destination terminal, it is necessary that one more separate connection is available as the call which has been established at present is maintained. Or, at the IP network 15, it is necessary that processing and so on for switching to one more separate connection as for the destination terminal are available, as the call which has been established at present is maintained. However, the invention does not define the detail of operations on the occasion of switching a call at the destination terminal or at the IP network 15.

Fig. 5 shows one example of processing on the occasion of rate comparison operation. A step b1 shows a start of the processing. At a step b2, whether or not a rate comparison table is recorded in the rate comparison information record part 41 is checked. If not recorded, the routine goes to a step b3. At the step b3, it is connected to a database server which is established in the IP network 15 and data such as available calling paths and rates is obtained. In cases where, at the step b2, the rate comparison table is recorded in the rate comparison information record part 41, the routine goes to a step b4. At the step b4, the available calling paths, rate information and so on are obtained from the rate comparison information record part 41 in the telephones 1 and 2.

When the available calling paths, the rate information and so on are obtained at the step b3 or at the step b4, whether or not a statistic value of duration of a call with the destination of the call at present is recorded in the utilization statistic record part 31 is checked at a step a5. If not recorded, the routine goes to a step b6 and if recorded, it goes to a step b7. At the step b6, rate comparison is calculated by use of a defined value as projected duration of a call. At the step b7, the statistic value of duration of a call with the destination of the call is picked out from the utilization statistic record part 31 and the projected duration of a call is obtained. At a step b8, the rate comparison is calculated by use of the projected duration of a call which is obtained from the step b7.

After the step b6 or the step b8, the routine goes to a step b9, and from calculation results of rate comparison, Z is selected as a calling path in which a rate becomes the cheapest. At a next step b10, whether or not the calling path Z does not have a problem of quality of a call is checked based upon call quality information which is measured in the call quality measurement part 40. If there exists a problem of quality of a call, the routine goes to a step b11. If no problem, it goes to a step b12. With regard to measurement of quality of a call, it will be explained in detail in Fig. 6. The step b11 shows that a reply of No is carried out in the calling path control part 42 in Fig. 4. The step b12 shows that the calling path control part 42 carries out a reply of Yes. Thereafter, the routine goes to a step b13 to complete the processing.

Fig. 6 shows one example of procedures for measuring quality of communication. A step c1 shows a start of processing. At a step c2, a test packet is transmitted to a destination of a call through the calling path Z. This test packet is of almost the same size as a packet which is transmitted on the occasion of an actual call, and a plurality of test packets are transmitted at the same level of time intervals. A test packet receiving side has a function for sending a reply to a transmitting side, as for this test packet. At a step c3, a transmission time of the test packet is recorded, in order to measure delay and jitter. At a step c4, whether or not the reply for the test packet is received from the receiving side is checked. If the reply for the test packet is received, the routine goes to a step c5. At the step c5, a reception time is recorded and the routine goes to a step c6. In cases where the reply for the test packet is not received at the step c4, the routine goes directly to the step c6.

At the step c6, whether or not the test packet was transmitted by specified number of times is checked. If not transmitted by the specified number of times, the routine goes to the step c2, and if transmitted by the specified number of times, it goes to a step c7. At the step c7, whether or not all replies for the test packet are received or whether or not time is running out is checked. In cases where there exists a reply which is not yet received and time is not running out, the routine goes to the step c4. In cases where all replies were received or time was out, the routine goes to a step c8. At the step c8, delay, jitter and reply reception rate are calculated. At a next step c9, whether or not switching to the calling path Z is reasonable is judged from the rate of the calling path Z, the delay, the jitter and the reply reception rate. For this judgment, it is contemplated that, as one example of evaluation of a relation of the rate of the calling path Z and the quality of the call, for example, rates are classified into 3 levels, and as for respective classifications, the delay, jitter and reply reception rate which are maximum allowable are set. In this case, in cases where at least one of the set delay, jitter and reply reception rate exceeds the maximum allowable value in the classification to which the calling path Z belongs, it is possible to judge that it is no reasonable.

At a step 10, contents of the judgment at the step c9 are checked. In cases where it is judged not to be reasonable at the step c9, the routine goes to a step c11, and in cases where it is judged to be reasonable, the routine goes to a step c12. The step c11 shows that, at the step b10 of Fig. 5, the routine goes to the step b11 where a reply of No is returned. The step c12 shows that, at the step b10 of Fig. 5, the routine goes to the step b12 where a reply of Yes is returned. Thereafter, the routine goes to a step c13 to complete the processing.

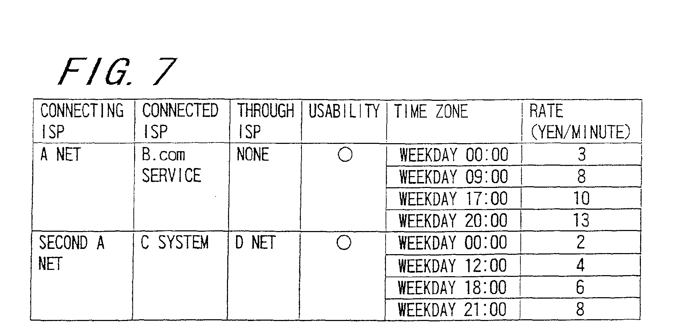

Fig. 7 shows one example of rate information recorded in a rate information providing server which is established in any one of the IP network 15 of Fig. 1, or information which is recorded in the rate comparison information record part 41 in the terminal shown in Fig. 3. As the calling paths, a connecting ISP from which a connection is established, a connected ISP to which the connection is established, a through ISP through which the connection passes and so on are recorded. The usability is also recorded. When the rate is set in response to a day of the week and time zone, for example, a rate with a unit of 1 minute is recorded in association with the time zone and so on. In such database server, data which is recorded in the database can include time zone, a day of the week, whether or not it is a national holiday, area, distance, duration of a call, rate, a path in the IP network and so on.

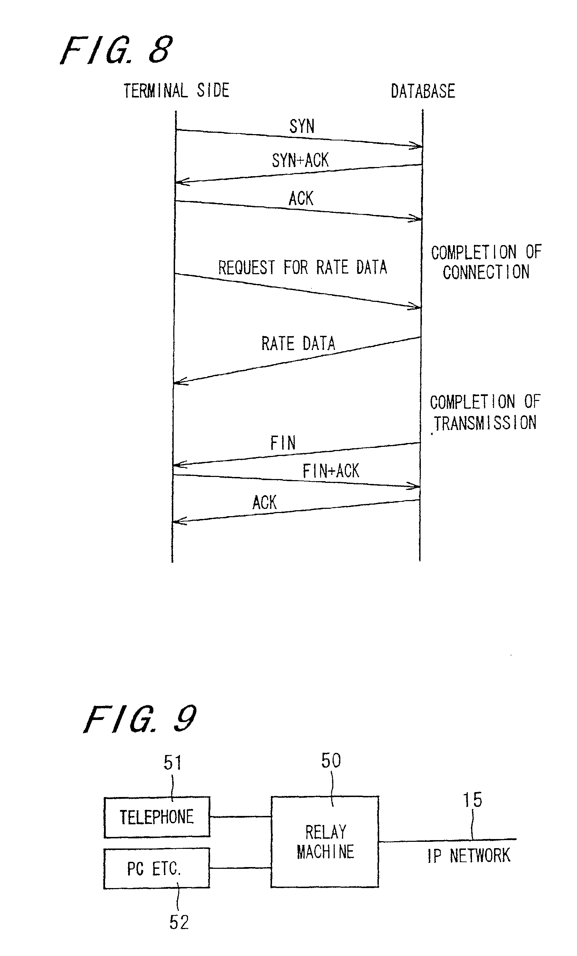

Fig. 8 shows one example of communication procedure on the occasion of inquiring the database server for the rate information. In this example, TCP connection is used and transfer of the rate information is carried out. That is, in order that, by use of 3 way handshake as TCP connection procedure, SYN is transmitted from the terminal side, and SYN+ACK is replied from the database server, and ACK is transmitted from the terminal side, after respective TCP segments are exchanged and a connection is established, the transfer of the rate information is carried out. After completion of the transfer, by cutting procedure, respective TCP segments of FIN, FIN+ACK, ACK are exchanged and the connection is cut off.

Fig. 9 shows a schematic system structure as to other embodiment of the invention. In this embodiment, it is available even in cases where not only a telephone 51 but also a personal computer 52 which is abbreviated to PC, and so on are connected to a relay machine 50 which has a function for switching to a calling path with cheap rate. Further, such function can be equipped with ISP in the IP network 15 of Fig. 1. In such ISP, processing for charging a rate which was required for a call to a user of the telephone 51 as the terminal and the personal computer 52.

As described above, a calling terminal and a server of a calling system which ISP disposes are realized by a program for having the computer function processing for switching a calling path.

An object of the invention may be this program itself and may be a recording medium in which this program is recorded and which can be read out by the computer.

Firstly, in the invention, as this recording medium, a memory which is necessary for carrying out processing in a microcomputer and so on in the control means 21 shown in Fig. 2, for example, a thing like the ROM 22 may be a program medium, and although it is not shown in the drawings, as an external memory device, a program read-out device is disposed and a program medium to which the recording medium is inserted and thereby, which can be read out may be used. In each case, the program stored may be of a structure that the microcomputer accesses thereto and executes it, or in any case, usable is a system in which the program is read out and the read-out program is loaded to a program memory area of the RAM 23 and so on, and the program is executed. This program for use in loading is assumed to be stored in the ROM 22 and so on, in advance.

Here, the program medium is a recording medium which is configured to be separable from a main body of the terminal and so on, and may be a medium for holding a program fixedly including tape series such as a magnetic tape and a cassette tape, disk series of a magnetic disk such as FD (flexible disk) and HD (hard disk), and an optical disk such as CD-ROM/MO/MD/ DVD, card series of an IC card (including a memory card)/an optical card and so on, or a semiconductor memory using a mask ROM, EPROM, EEPROM, a flash ROM and so on.

Further, since the invention is of a system structure that it can be connected to a communication network including the Internet 3, a medium for holding a program uncertainly may be usable so that the program is downloaded from the communication network.

In addition, the content which is stored in the recording medium is not limited to the program but may be data.

Then, in the invention, as the program itself, it may be processing itself which is executed by the microcomputer and so on in the control means 21 shown in Fig. 2, or it may be an article which can be downloaded by accessing to the communication network including the Internet 3, or may be the downloaded article, or may be an article which is sent out from here. Further, it may be also an article which is generated as a result of processing which is carried out in the calling terminal or the calling system based upon the program which was downloaded. Alternatively, it may be an article which is generated as a result of processing which is carried out in the calling terminal or the calling system when it is sent out from here.

In addition, these articles are not limited to programs but may be data.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

**Claims**

1. A calling method though an information and communication network comprising:

   the steps of setting a calling path (16) in an information and communication network;
   connecting a transmitting terminal (1) to a receiving terminal (2); and
   establishing a call in packet communication,

   wherein, while the call is continuing between the transmitting terminal (1) and the receiving terminal (2), when it becomes possible to use a calling path (17) with cheaper rate than that of the calling path (16) which has been established, the transmitting terminal (1) or the receiving terminal (2) switches the calling path (16, 17) so as to have a conversation through the calling path (17) with cheaper rate.

2. The calling method though the information and communication network of claim 1,
   wherein as for the switching of the calling path (16, 17), in cases where the switching is available at a destination terminal or in the information and communication network, as a calling path (16) which has been established is maintained, a connection is established from the established calling path (16) to the calling path (17) with cheaper rate, and after the connection is completed, the switching is carried out by disconnecting the calling path (16) which has been established.

3. The calling method though the information and communication network of claim 1,
   wherein timing for switching the calling path (16, 17) can be designated from the transmitting terminal (1) or the receiving terminal (2).

4. The calling method though the information and communication network of any one of claims 1 to 3,
   wherein a data base is constructed which provides rates of plural calling paths (16, 17) and data relating to the calling paths (16, 17) and their usability, and judgment for switching the calling path (16, 17) is carried out by obtaining data relating to the rates from the database.

5. The calling method though the information and communication network of claim 4,
   wherein data as to the rates can be obtained from the database, relating to at least one of time zone, a day of the week, whether it is a national holiday or not, area, distance, and duration of a call.

6. The calling method though the information and communication network of any one of claims 1 to 5,
   wherein whether or not the rate is cheaper than that of the established calling path (16) is judged by predicting not only a difference of the rates at that time point but also time up to completion of the call and by calculating the rate for the call based upon the predicted time.

7. The calling method though the information and communication network of any one of claims 1 to 6,
   wherein whether or not the rate is cheaper than that of the established calling path (16) is judged not only by difference of the rates at that time point but also by measurement of quality of the call in the calling path (16, 17) which can be switched, and comparison of the measured values.

8. The calling method though the information and communication network of claim 7,
   wherein as for the measurement of the quality of the call, a plurality of packets to be measured are transmitted through a target calling path (16, 17), and a reply from a receiving side is received so that receiving reply rate, delay and jitter which is fluctuation of the delay are measured.

9. The calling method though the information and communication network of any one of claims 1 to 6,
   wherein an object to which the established calling path (16) is switched includes a public line network for use in telephone communication or a leased line network.

10. The calling method though the information and communication network of any one of claims 1 to 9,
    wherein at least one of the transmitting terminal (1) and the receiving terminal (2) is connected to the information and communication network through the public line network for use in telephone communication or the leased line network.

11. A calling terminal capable of establishing a call in packet communication through a calling path (16) which is set in the information and communication network, and of serving as a transmitting terminal (1) or a receiving terminal (2), the calling terminal comprising:

path searching means for searching an available calling path (17) with cheaper rate than that of a calling path (16) which has been established, during the call established between the transmitting terminal (1) and the receiving terminal (2), and
path switching means for switching, when the calling path (17) with cheaper rate than that of the established calling path (16) is searched by the path searching means, the established calling path (16) to the searched calling path (17).

12. The calling terminal though the information and communication network of claim 11,
wherein the path switching means, in cases where the switching of the calling path (16, 17) is available at a destination terminal or in the information and communication network, carries out a connection to the calling path (17) with cheaper rate than that of the established calling path (16) as the calling path (16) which has been established is maintained, and after the completion of the connection, the established calling path (16) is disconnected.

13. The calling terminal though the information and communication network of claim 11 or 12, further comprising:

designating means capable of designating a timing for switching the calling path (16, 17) by the path switching means.

14. The calling terminal though the information and communication network of any one of claims 11 to 13, further comprising:

database means for providing data relating to a calling path (16, 17) and including rates of plural calling paths (16, 17) and its usability, wherein, in the path switching means, judgment for switching the calling path (16, 17) is carried out by obtaining data relating to rates from the database means.

15. The calling terminal though the information and communication network of any one of claims 11 to 13,
wherein a database for providing data relating to the calling path (16, 17) and including the rates of plural calling paths (16, 17) and its usability is constructed in the information and communication network, and the path switching means carries out the judgment for switching the calling path (16, 17) by obtaining data relating to the rates from the database.

16. A calling system capable of establishing a call in packet communication through a calling path (16) which is set in the information and communication network, and of serving as a transmitting terminal (1) or a receiving terminal (2), the calling system comprising:

a call relay device by which a plurality of calling paths (16, 17) can be set in the information and communication network;
a path exchanging device responsive to a call from the transmitting terminal (1) to the receiving terminal (2) for establishing a calling path (16) which is selected from the plurality of calling paths (16, 17) by the call relay device and for switching the calling path (16) to a calling path (17) with cheap rate when the calling path (16) which has been established and other calling paths (17) are monitored and a calling path (17) with cheaper rate than that of the established calling path (16) becomes available, and
a call charging device for charging a rate in response to the calling path (16, 17) to at least one of the transmitting terminal (1) and the receiving terminal (2).

17. A calling system capable of establishing a call in packet communication through a calling path (16) which is set in the information and communication network, and of serving as a transmitting terminal (1) or a receiving terminal (2), the calling system comprising:

a call relay device which can set a plurality of calling paths (16, 17) in the information and communication network;
a path exchanging device responsive to a call from the transmitting terminal (1) to the receiving terminal (2) for establishing a calling path (16) which is selected from the plurality of calling paths (16, 17) by the call relay device and for switching the calling path (16) which has been established to another calling path (17) in response to a request from the transmitting terminal (1) or the receiving terminal (2); and
a call charging device for charging a rate in response to the calling path (16, 17) to at least one of the transmitting terminal (1) and the receiving terminal (2).

FIG. 1

# FIG. 2

1, 2

| | | |
|---|---|---|
| 22 | 23 | 24 |
| ROM | RAM | CLOCK FUNCTION MEANS |

28

21 — CONTROL MEANS

COMMUNICATION MEANS — 15

IP NETWORK

| | | |
|---|---|---|
| REWRITABLE NON-VOLATILE MEMORY MEANS | INPUT AND OUTPUT MEANS | VOICE CONTROL MEANS |
| 25 | 26 | 27 |

EP 1 298 942 A1

# FIG. 3

1, 2

**31** UTILIZATION STATISTIC RECORD PART

**32** UTILIZATION STATISTIC CONTROL PART

**33** VOICE INPUT AND OUTPUT PART

**34** VOICE FUNCTION PART

**38** RATE CALCULATION CONTROL PART

**36** CLOCK FUNCTION PART

**37** COMMUNICATION CONTROL PART

**39** RATE CALCULATION PART

**40** CALL QUALITY MEASUREMENT PART

**35** USER INTERFACE PART

**41** RATE COMPARISON INFORMATION RECORD PART

**42** CALLING PATH CONTROL PART

**43** COMMUNICATION I/F PART

**15** IP NETWORK

EP 1 298 942 A1

# FIG. 4

```
        ( PROCESSING )  a1
        (   START    )
              │
              ▼
        ╱ INSTRUCTION ╲        a2
      ╱  OF RATE COMPARISON ╲────── NO ──────┐
       ╲  IS GENERATED?  ╱                   │
         ╲            ╱                       │
              │ YES                           │
              ▼                               │
      ╱  CALLING PATH 17  ╲     a3            │
     ╱ WHICH IS MORE SUITABLE ╲               │
─ NO ─ THAN CALLING PATH 16 WHICH HAS         │
     ╲  BEEN ESTABLISHED  ╱                   │
  │    ╲    IS FOUND?  ╱                       │
  │         │ YES                             │
  │         ▼                                 │
  │   ┌──────────────────────┐                │
  │   │ CONNECTION TO CALLED SIDE │ a4         │
  │   │ THROUGH CALLING PATH 17 │              │
  │   └──────────────────────┘                │
  │         │                                 │
  │         ▼ ◄──────────┐                    │
  │     ╱ CONNECTION IS ╲   a5                │
  │ NO ─ COMPLETED AND CALL BECOMES           │
  │     ╲  AVAILABLE?  ╱                       │
  │         │ YES                             │
  │         ▼                                 │
  │   ┌──────────────────────┐                │
  │   │   START OF CALL BY   │ a6             │
  │   │   CALLING PATH 17   │                 │
  │   └──────────────────────┘                │
  │         │                                 │
  │         ▼                                 │
  │   ┌──────────────────────┐                │
  │   │ CUT OFF CALLING PATH 16 │ a7           │
  │   └──────────────────────┘                │
  │         │                                 │
  └─────────┼─────────────────────────────────┘
            ▼
      ┌──────────────────────┐
      │ CONTINUATION OF CALL │ a8
      └──────────────────────┘
            │
            ▼
      ( COMPLETION OF )  a9
      (  PROCESSING  )
```

*FIG. 5*

PROCESSING START b1

RATE COMPARISON INFORMATION IS RECORDED IN TERMINAL? b2

NO → DATA SUCH AS CALLING PATHS AND RATES IS OBTAINED FROM DATABASE b3

YES → RATE DATA IS PICKED OUT FROM RATE COMPARISON INFORMATION b4

STATISTIC VALUE OF DURATION OF PAST CALLS WITH DESTINATION OF CALLS IS RECORDED? b5

NO → AS TO PATH WHICH HAS BEEN ESTABLISHED AT PRESENT AND ANOTHER PATH, RATE IS CALCULATED FROM RATE DATA PICKED OUT AND DURATION OF CALL DEFINED IN SYSTEM b6

YES → PROJECTED DURATION OF CALL WITH DESTINATION OF CALL IS DERIVED FROM STATISTIC VALUES RECORDED IN TERMINAL b7

AS TO PATH WHICH HAS BEEN ESTABLISHED AT PRESENT AND ANOTHER PATH, RATE IS CALCULATED FROM RATE DATA PICKED OUT AND PROJECTED DURATION OF CALL b8

PATH (Z) WITH CHEAPEST RATE IS DERIVED b9

NO PROBLEM OF CALL QUALITY IN Z? b10

NO → NO IS RETURNED b11

YES → YES IS RETURNED b12

COMPLETION OF PROCESSING b13

*FIG. 6*

( PROCESSING START ) c1

TEST PACKET IS TRANSMITTED
TO DESTINATION OF CALL
THROUGH PATH Z    c2

TRANSMISSION TIME
IS RECORDED    c3

REPLAY
FOR TEST PACKET IS
RECEIVED?    c4    YES

NO

RECEPTION TIME
IS RECORDED    c5

NO ←  TRANSMITTED BY
PREDETERMINED NUMBER
OF TIMES?    c6

YES

ALL
OF REPLIES ARE
RECEIVED?    c7    NO

YES

CALCULATION OF RECEPTION RATE,
DELAY, FLUCTUATION OF DELAY (JITTER)    c8

JUDGES WHETHER PATH Z IS REASONABLE
FROM RATE OF PATH Z, RECEPTION
RATE, DELAY, SIZE OF JITTER    c9

NO ←  REASONABLE?    c10

YES

NO IS
RETURNED    c11

YES IS
RETURNED    c12

( COMPLETION OF
PROCESSING ) c13

## FIG. 7

| CONNECTING ISP | CONNECTED ISP | THROUGH ISP | USABILITY | TIME ZONE | RATE (YEN/MINUTE) |
|---|---|---|---|---|---|
| A NET | B.com SERVICE | NONE | ○ | WEEKDAY 00:00 | 3 |
| | | | | WEEKDAY 09:00 | 8 |
| | | | | WEEKDAY 17:00 | 10 |
| | | | | WEEKDAY 20:00 | 13 |
| SECOND A NET | C SYSTEM | D NET | ○ | WEEKDAY 00:00 | 2 |
| | | | | WEEKDAY 12:00 | 4 |
| | | | | WEEKDAY 18:00 | 6 |
| | | | | WEEKDAY 21:00 | 8 |

## FIG. 8

TERMINAL SIDE                                    DATABASE

SYN

SYN+ACK

ACK

REQUEST FOR RATE DATA

COMPLETION OF
CONNECTION

RATE DATA

COMPLETION OF
TRANSMISSION

FIN

FIN+ACK

ACK

## FIG. 9

51                      50                      15

| TELEPHONE |          | RELAY MACHINE |       IP NETWORK

| PC ETC. |

52

**European Patent Office**

**EUROPEAN SEARCH REPORT**

Application Number

EP 02 02 1066

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 196 45 368 A (TELES AG INFORMATIONSTECHNOLOGIEN) 16 April 1998 (1998-04-16) * abstract * * column 3, line 56 - column 4, line 63 * * column 10, line 45-55 * * figure 5 * | 1-17 | H04Q3/66 H04L12/28 H04L12/56 H04M7/00 |
| A | EP 1 006 738 A (NORTEL NETWORKS CORP) 7 June 2000 (2000-06-07) * abstract * * column 3, paragraph 9 * * column 11, paragraphs 42,43 * * claims 1,2; figure 4 * | 1-17 | |
| A | US 6 292 551 B1 (ENTMAN M E ET AL) 18 September 2001 (2001-09-18) * abstract * * column 6, line 37-42 * * figures 1,2 * | 1-17 | |
| A | EP 1 113 620 A (AT & T CORP) 4 July 2001 (2001-07-04) * abstract * * column 10, paragraphs 35,37 * * claims 1,5,6; figure 2 * | 1-17 | TECHNICAL FIELDS SEARCHED (Int.Cl.7) H04Q H04L H04M |

The present search report has been drawn up for all claims

| Place of search | Date of completion of the search | Examiner |
|---|---|---|
| THE HAGUE | 5 February 2003 | Gijsels, W |

EPO FORM 1503 03.82 (P04C01)

**ANNEX TO THE EUROPEAN SEARCH REPORT
ON EUROPEAN PATENT APPLICATION NO.**                    EP 02 02 1066

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2003

| Patent document cited in search report | | Publication date | Patent family member(s) | | Publication date |
|---|---|---|---|---|---|
| DE 19645368 | A | 16-04-1998 | DE | 19645368 A1 | 16-04-1998 |
| | | | AT | 186167 T | 15-11-1999 |
| | | | WO | 9815933 A2 | 16-04-1998 |
| | | | DE | 59700636 D1 | 02-12-1999 |
| | | | EP | 0929884 A2 | 21-07-1999 |
| | | | ES | 2140965 T3 | 01-03-2000 |
| | | | NO | 991625 A | 03-06-1999 |
| EP 1006738 | A | 07-06-2000 | US | 6463053 B1 | 08-10-2002 |
| | | | EP | 1006738 A2 | 07-06-2000 |
| | | | JP | 2000174825 A | 23-06-2000 |
| US 6292551 | B1 | 18-09-2001 | NONE | | |
| EP 1113620 | A | 04-07-2001 | EP | 1113620 A1 | 04-07-2001 |

EPO FORM P0459

For more details about this annex : see Official Journal of the European Patent Office, No. 12/82